# EUROPEAN PATENT APPLICATION

(11) **EP 2 933 066 A1**
(43) Date of publication of application: **21.10.2015**
(21) Application number: 14305582.0
(22) Date of filing: 17.04.2014
(51) Int. Cl.: B25J 9/16, G06F 9/445

(54) **Activity monitoring of a robot**

(71) Applicant: Aldebaran Robotics, 75014 Paris (FR)
(72) Inventor: Monceaux, Jérôme, 75013 Paris (FR); Gate, Gwennael, 75013 Paris (FR); Bbarbieri, Gabriele, 75017 Paris (FR)
(74) Representative: Nguyen Van Yen, Christian

(57) **Abstract**

There is disclosed a computer-implemented method of handling a software application on a robot, said robot executing a plurality of software applications, at least two software applications competing for execution, the method comprising the steps of: monitoring the execution of at least one software application; in response to receiving a modification request, modifying said at least one software application; executing the modified software application on the robot. Described developments for example comprise the use of modification and/or execution rules, the modification of a software application based on the monitoring of one or more software applications, examples of centralized or distributed supervision and examples different possible roles endorsed by the robot manufacturer and application providers.

## Description

### Technical Field

This patent relates to the field of digital data processing and more particularly to the monitoring of software applications executed by a humanoid robot.

### Background

The man-machine interaction with a robot is very different from interactions with a personal computer. Companion robots advantageously can establish an emotional relationship with human beings, with interactive dialogs and physical actions in the tangible reality. In the context of a companion humanoid robot, the interaction model with human users significantly changes when compared with the interaction model with personal computers (and their different forms such as a tablet PC or a smartphone).

In addition to sensors and actuators, a companion robot is provided with processing, memory, storage and I/O means. A companion robot also embeds and implements specific software applications ("apps").

There is a need for methods and systems of activity monitoring of a robot, in particular of software applications installed on the robot.

### Summary

There is disclosed a computer-implemented method of handling a software application on a robot, said robot executing a plurality of software applications, at least two software applications competing for execution, the method comprising the steps of: monitoring the execution of at least one software application; in response to receiving a modification request, modifying said at least one software application; executing the modified software application on the robot.

On a robot, (at least similar) software applications compete for execution. In an embodiment, a software application is associated with execution rules, specifying how and when to execute the application. In response to the environment as perceived by the sensors of the robot, execution rules are continuously applied and competing software applications are compared. Software applications can also be associated with execution priority levels. Upon verification of execution rules and/or priority levels, a software application is selected and executed. All - or a large fraction - of executing software applications are monitored (as well as non-executing applications). As a consequence of said monitoring, one or more software applications can be modified.

In a development, a software application is associated with at least one predefined modification rule indicative of systemic risks and wherein the step of modifying the software application comprises successfully verifying said modification rule. This embodiment relates to the degree of autonomy of the robot. Modification rules serve as filters to avoid possible systemic risks, e.g. by grouping software applications by criticality of execution.

In a development, modifying a software application comprises modifying the execution rules associated with said software application. This embodiment specifies that the conditions of execution of a software application can be changed. Execution rules comprise many possible parameters. For example, the order or priority of an execution of an application can be changed. For example, a weather information can be associated with a higher priority than the enunciation of a news RSS. A bias can be introduced to launch an app more frequently than some others (e.g. dancing over speaking). A maximum number of executions can be defined. A total duration of speech can be defined. A minimal and/or a maximal interaction time can be defined. Perceived contexts (e.g. categorized events) can be required to launch an application (e.g. presence or absence of a kid, of a smiling face, etc). The execution rules also can optionally comprise metadata required for execution (encryption keys, secured boot, etc).

In a development, modifying a software application comprises modifying the program code of with said software application. In addition or complimentary to the conditions of execution or of the metadata associated with a software application, the program itself (i.e. lines of code) can be modified. The modes of execution of applications can be changed, to various extents. In other words, not only the triggering conditions can be changed, but also the scope of the application can be changed.

In a development, monitoring a software application comprises monitoring execution or usage data associated with the software application, said data being selected from the group comprising parameters such as frequency, date, time, geolocation, user data feedback or input, user emotional reaction, interacting user profile, interaction duration, errors, function calls, triggering conditions and combinations thereof.

In a particular embodiment, malfunctioning robots can be notified to a centralized system hosted by the robot manufacturer. Basic and advanced statistics can be derived from detailed execution data (what the application does, e.g. performed actions, called functions, input or output) and/or usage data (e.g. context, event, user related data).

In a development, the method further comprises deriving statistical data from said usage execution or usage data. Raw data is first collected. Then statistics or analytics can be derived from said raw data.

In a development, the method further comprises displaying said statistical data. The statistics can be displayed to many different parties, for example the application provider and/or the robot manufacturer and/or the user owner of the robot. At this stage, the human supervision can occur

In a development, a software application is modified under human supervision. This embodiment implies technical means of supervision (e.g. communication and display). It corresponds to an "open-loop" configuration or mechanism. Man remains "in the loop". In practice, a human administrator or supervisor analyses collected data and further decides of corrective actions if any. Even if robotic systems can be designed from scratch (e.g. upstream) to fit human environments, this mode allows for further regulations (i.e. downstream actions).

In a development, a software application is directly modified upon receiving the modification request without human supervision. This embodiment corresponds to the closed-loop regulation mechanism. Apps metrics and/or statistics are *directly* coupled with the software applications. Based for example on predefined logic (e.g. thresholds and completion rules), an automated logic can determine and implement feedback loops. There is no need to display derived statistics, even if statistics can constitute a basis for decision support. In an embodiment, modulo a (generally manageable) latency, corrective or proactive actions can be propagated among the fleet of robots. In some embodiments, local rules (e.g. user profiles or user preferences or robot own golden security rules such as the Asimov "Three laws of robotics") can maintain prior systems unchanged (entirely or to a configurable extent) despite a global or large-scale update. The described robot health monitoring module also for example can authorize or forbid changes in software applications. Open-loop and closed-loop schemes can be combined.

Several rules can be defined and applied to manage such retroaction feedbacks based on the appropriate monitoring of apps. For example if statistics indicate that an app is very popular, the ranking of the corresponding application can lead to favor the execution of the application. The ranking can be absolute or can depend on the context of execution. The interventions of the robot generally can be scored based on users' reactions and associated involved applications can inherit the good scores. The consumption of computing resources can be adjusted in view of the monitoring of applications (under-utilizations or over-utilizations can be compensated)

In a development, the method further comprises receiving a confirmation of a user before modifying a software application. This embodiment underlines that the user owner of the can still have the last word, in any situation.

In a development, a modification request is received from the robot logic and/or the robot manufacturer and/or an application provider. Different entities can control the actions taken on the software application. The internal logic of the robot (the "mind") can continuously update the execution a rule associated with software applications, said rules for example defining priorities and/or means to solve conflicts if any. The software applications also can be controlled by an external party. For example the robot provider (or robotic platform operator or manufacturer of the robot) can control (e.g. update at any time). Intermediate solutions or states are possible: the robot and/or other entities (i.e. humans and/or other robots) can collectively control the robot (while some features can be exclusively controllable by a predefined party, for example given real-time constraints and connectivity conditions).

In a development, the method further comprises identifying a missing application in the robot, retrieving and installing said missing software application in the robot during the dialog with the user.

There is disclosed a computer program comprising instructions for carrying out one or more steps of the method said computer program is executed on a suitable computer device or robotic device. There is disclosed a system comprising means adapted to carry out one or more steps of the method.

Advantageously, the monitoring of apps activities - and further corrective actions brought to the robot - are valuable for a) the robotic platform operator, for general purposes b) for the app provider (in order to improve the app, improve the contents, e.g. improve the contents of the jokes in case of "jokes" application, correct bugs or incorrect or non optimized rules, improve return on investments, time spent etc) and c) for the user himself (discovery of apps, monitoring of the companion etc.).

Advantages for the app provider for example comprise a better control of the installed base of robots. The manufacturer may (or not) carry the burden of a (residual) legal liability regarding the robot. Described embodiments allow mitigating associated risks and handling the corresponding operations. Critical parts of the program code can remain under control while other parts can be delegated or even opened to crowd sourcing. In a specific embodiment, a licensing model can be in pay-per-download, but also can be in pay-per-usage (or revenue-per-usage), the latter model corresponding to a "competitive execution" of software applications on the robot.

Advantages for the application provider comprise the possibility of continuous improvements of the considered application, by accessing a local (narrower) perspective about the usage of the app. The time being spent with the application for example can be globally analyzed. In more details, the contextual conditions of the launch of an application can be investigated in-depth. Such an analysis further enables the app provider to improve the launching conditions and/or to compete better with other similar applications.

Advantages for the human user comprise a better user experience, a faster evolution of the personal robot, an increased reliability and safety of the robot.

### Brief description of drawings

Embodiments of the present invention will now be described by way of example with reference to the accompanying drawings in which like references denote similar elements, and in which:
Figure 1 illustrates the global technical environment of the invention;
Figure 2 details some aspects of an embodiment of the method.

### Detailed description

Humanoid robots are an emerging form of "social technology". As companion robots, humanoid robots are increasingly considered as partners by human users, maintaining a durable if not emotional relationship and continuously learning (from each other, i.e. robots learning from users and vice-versa). For example, and even if being only machines, personal robots present a great value for coaching activities (e.g. diet, sport or education). Compared to personal computers, simulated emotions and body language allow for more engaging, persuasive, convincing or otherwise trustful relationships.

Humanoid robots are information processing machines and therefore a wide range of comparisons with personal computers can be established. Some aspects can be considered common ground. Some other aspects are very different when comparing personal robots and personal computers.

For example, regarding the aspect of "software applications", some quite substantial differences can be briefly underlined. A first significant difference lies in the multimodal characteristics of a personal robot, i.e. by design. A companion robot can follow its owner (i.e. present displacement capabilities) and can touch objects or interact with its environment. By design, a personal computer is lacking such various environmental feedbacks. This "multimodal" feature or characteristics implies deep consequences regarding the management of applications on the robot. For example, according to one distinguishing aspect, a plurality of software applications can be in competition for being executed on a robot. Such scenario is not common with personal computers.

Another difference is associated with the man-machine interface as such. With a personal computer, even if multitasking allows for software applications to run in parallel, the predominant visual human-machine interface usually renders one main software application at a time (e.g. word processing), - the attention of the user is at least directed to one main cognitive activity. In addition, the user has generally an active and decisive role in triggering applications or activities. A personal computer is rather passive. With a companion robot, these aspects are different. A robot can respond to orders through voice commands, but a companion robot is generally much more "autonomous", i.e. proactively initiates actions which are mostly indirectly triggered by the user (e.g. body language and conversation). Of course, autonomy and multimodal features are only examples; there are further differences between personal computers and personal robots.

The differences between a personal computer and a personal robot are discussed again from a slightly different perspective. On a tablet or a smart phone, the execution of given application is triggered with intention by the user. In the context of companion robot, executions of applications are mostly triggered automatically and sometimes in response to the query of a user (either explicitly for example by voice command, or either in implicitly for example by the detection of a smile of the user). Noticeably, executions of applications are rendered in a sequential order to human senses (which does not mean or imply that different applications cannot work in parallel in the background). For example, an execution of application "weather" can precede the execution of an application "stock markets". As soon as the application "stock markets" is interrupted by the user, the application "weather" can be handed over. In other words, the flow of words captured during conversation with the companion robots serves as a guide to the launch of applications. The very nature of the interaction with the companion robot is thus very different from the usual interaction with the tablet, due to the lack of a "conversational mode of interaction". This mode in particular is multi-modal by design. For example the detection of a smile of the user can be immediately translated into a positive feedback. In theory, a tablet could implement the detection of emotions of the user through the camera embedded in the tablet, but by design the traditional mode of interaction with a tablet is different and such solutions have not been disclosed and a fortiori implemented.

In fine, the decision logic for handling the execution of software applications on a humanoid companion robot is significantly different from the logic prevailing with personal computers.

Related to this aspect, a subtle monitoring of the "activities" of (e.g. competing) software applications on a robot opens a range of opportunities of new services, which in turn can lead to a better user experience.

Before describing such new services, some technical terms are now defined.

A software application installed in a robot is a computer program code which when executed by some processing means can perform one or more method steps. A software application on a companion or humanoid robot can be associated with a dialog (e.g. a collection of predefined sentences, including responses to anticipated questions) and/or an action (e.g. the execution of a dance or a physical action) and/or an animation (e.g. movements of the head, activation of lightning's if any, etc) and combinations thereof (e.g a dialog while dancing). More generally, a software application can be a standalone application, with or without interactions or interaction capabilities with other applications.

Examples of software applications for a robot comprise a weather application adapted to provide (e.g. by pronouncing or enunciating or restituting audio output) local weather conditions, a game application, a dance application, a storytelling application, etc. In particular, it is noticeable that a software application for a robot can lead to a set of physical actions of the robot (dancing, moving, seizing and displacing an object). A software application for a smart phone or a tablet generally does not comprise a real tangible action in the physical world.

Software applications can be interdependent. For example, because software applications can represent complex objects, there can be observed "transitions" between a priori distinct software applications. On a tablet computer, a weather software application provides meteorological data, while a drawing software application provides drawing tools. On a robot, it is conceivable that the robot accompanies the spoken result "it is -10°C degrees outside" and/or draws a snowman on a piece of paper (and/or by symbolizing the outside cold by a combination of gestures). In other words, as a result of a multimodal output, software applications may be further combined (at the output levels or at lower levels, e.g. variables or parameters or scripts can be shared or modified between software applications).

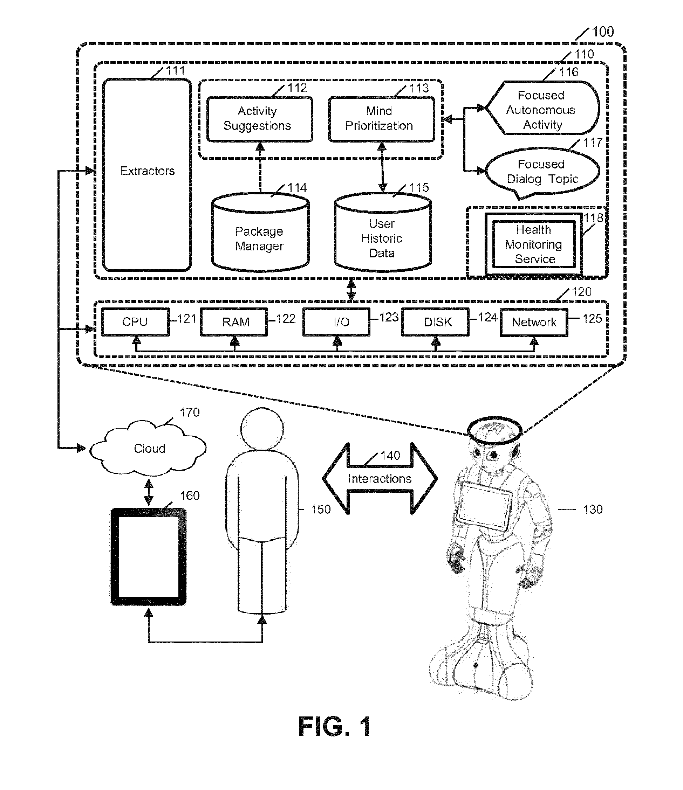

The figure 1 illustrates the global and technical environment of the invention. A robot 130 comprises sensors and actuators. A logic or "mind" 100 is implemented in the robot or associated with it (for example remotely) and comprises a collection of software 110 and hardware components 120. The robot 130 is interacting (by bilateral or two-ways communications 140, including one or more dialog sessions) with one or more users 150. Said one or more users can access other computing devices 160 (for example a personal computer such as a wearable computer or a smartphone or a tablet), which can be connected devices (in communication with a cloud of servers and/or a fleet of other robots or connected objects, etc). In particular, a connected device can be a wearable computer (e.g. watch, glasses, immersive helmet, etc).

The specific robot 130 on the figure is taken as an example only of a humanoid robot in which the invention can be implemented. The lower limb of the robot on the figure is not functional for walking, but can move in any direction on its base which rolls on the surface on which it lays. The invention can be easily implemented in a robot which is fit for walking.

In some embodiments of the invention, the robot can comprise various kinds of sensors. Some of them are used to control the position and movements of the robot. This is the case, for instance, of an inertial unit, located in the torso of the robot, comprising a 3-axis gyrometer and a 3-axis accelerometer. The robot can also include two 2D color RGB cameras on the forehead of the robot (top and bottom). A 3D sensor can also be included behind the eyes of the robot. The robot can also optionally comprise laser lines generators, for instance in the head and in the base, so as to be able to sense its relative position to objects/beings in its environment. The robot can also include microphones to be capable of sensing sounds in its environment. The robot of the invention can also include sonar sensors, possibly located at the front and the back of its base, to measure the distance to objects/human beings in its environment. The robot can also include tactile sensors, on its head and on its hands, to allow interaction with human beings. It can also include bumpers on its base to sense obstacles it encounters on its route. To translate its emotions and communicate with human beings in its environment, the robot of the invention can also include LEDs, for instance in its eyes, ears and on its shoulders and loudspeakers (for example located in its ears). The robot can communicate with a base station, with other connected devices or with other robots through various networks (3G, 4G/LTE, Wifi, BLE, mesh, etc). The robot comprises a battery or source of energy. The robot can access a charging station fit for the type of battery that it includes. Position/movements of the robots are controlled by its motors, using algorithms which activate the chains defined by each limb and effectors defined at the end of each limb, in view of the measurements of the sensors.

In a specific embodiment, the robot can embed a tablet with which it can communicate messages (audio, video, web pages) to its environment, or receive entries from users through the tactile interface of the tablet. In another embodiment, the robot does not embed or present a screen but it does have a video projector, with which data or information can be projected on surfaces in the vicinity of the robot. Said surfaces can be flat (e.g. floor) or not (e.g. deformations of the projecting surfaces can be compensated to obtain a substantially flat projection). In both embodiments (with screen and/or with a projector), embodiments of the invention remain valid: the claimed interaction model is only supplemented or complemented by visual interaction means. In any case, would the graphical means be out of order or deactivated on purpose, the conversational mode of interaction remains.

In an embodiment, the robot does not comprise such graphical user interface means. Existing humanoid robots are generally provided with advanced speech capabilities but are generally not provided with GUI. Increasing communities of users will probably not use graphical means (e.g. tablet, smartphone), even as a complement, to communicate with the robot, by choice and/or necessity (young people, impaired persons, because of a practical situation, etc).

The collection of software 110 (non-exhaustively) comprises software modules or objects or software code parts, in interaction with one another, including "extractors" 111, "activity suggestions" 112, "mind prioritization" 113, "package manager" 114, "User historical data" 115, "Focused Autonomous activity" 116 and "Focused Dialog Topic" 117 and a "Health Monitoring Service" 118.

An "Extractor Service" 111 generally senses or perceives something internal or external of the robot and provides short term data into the robot's memory. An Extractor service receives input readings from the robot sensors; these sensor readings are preprocessed so as to extract relevant data in relation to the position of the robot, identification of objects/human beings in its environment, distance of said objects/human beings, words pronounced by human beings or emotions thereof. Extractor services in particular comprise: face recognition, people perception, engagement zones, waving detection, smile detection, gaze detection, emotion detection, voice analysis, speech recognition, sound localization, movement detection, panoramic compass, robot pose, robot health diagnosis, battery, QR code handling, home automation, tribes, time and schedule.

An "Actuator Service" makes the robot 130 physically do or perform actions. Motion tracker, LEDs, Behavior manager are examples of "Actuator Services".

A "Data Service" provides long-term stored data. Examples of Data Services are a User Session Service 115, which stores user data, and their history of what they have done with the robot and a Package Manager Service 114, which provides a scalable storage of procedures executed by the robot, with their high level definition, launch conditions and tags. "Package Manager" in particular provides the scalable storage of Activities and Dialogs, and the Manifest. The "Manifest" contains metadata such as launch conditions, tags, and high level descriptions.

A "Mind Service" (for example a service Mind Prioritization 113) is one that will be controlled by the robot's central "Mind" when it is initiating action. "Mind Services" tie together "Actuator services" 130, "Extractor services" 111 and "Data services" 115. Basic Awareness is a "Mind Service". It subscribes to "Extractor Services" such as People perception, Movement detection, and Sound localization to tell the Motion Service to move. The "Mind" 113 configures Basic Awareness's behavior based on the situation. At other times, Basic Awareness is either acting own its own, or is being configured by a Running Activity.

"Autonomous Life" is a Mind Service. It executes behavior activities. Based on the context of a situation, the Mind can tell autonomous life what activity to focus ("Focused Autonomous Activity" 116). Metadata in manifests tie this information into the mind. Any activity can have access to one or more of the Operating System APIs. Activities can also directly tell Autonomous Life what activity to focus, or tell the Dialog Service what topic to focus on.

The "Dialog" service can be configured as a Mind Service. It subscribes to the speech recognition extractor and can use "Animated Speech Actuator Service" to speak. Based on the context of a situation, the Mind can tell the Dialog what topics to focus on (a "Dialog Topic"). The "Dialog" service also has its algorithms for managing a conversation and is usually acting on its own. One component of the Dialog service can be a "Focused Dialog Topic" service 117. Dialog Topics can programmatically tell the Mind to switch focus to (or execute or launch) a different Activity or Dialog Topic, at any time. One example of possible method to determine the Dialog Topic can comprise: at the moment that an dialog topic or activity's launch conditions become true or false, a list of all possible Activities or Dialog Topics for the moment is sent to the Mind; the list is filtered according to activity prioritization; the list order is randomized; the list is sorted (or scored) to give precedence to Activities or Dialog Topics that are "unique" and have been started less often; a special check to make sure the top Dialog Topic or Activity in this list isn't the same activity as the previous activity that was executed. The list can be again sorted and filtered according to the preferences of the user.

The robot can implement a "health monitoring" service 118. Such a service can act as a daemon or a "watchdog", to review or control or regulate the different priorities of the robot. Such a service can monitor (continuously, intermittently or periodically) the status of the internal components of the robot and measure or anticipate or predict or correct hardware failures. In a development, the fleet (e.g. installed base) of robots is monitored. The embedded service can continuously detect faulty situations and synchronize them with a "cloud" service (once every minute for example).

Hardware components 120 comprise processing means 121, memory means 122, Input/Output I/O means 123, mass storage means 124 and network access means 125, said means interacting with one another (caching, swapping, distributed computing, load balancing, etc). The processing means 121 can be a CPU (multicore or manycore) or a FPGA. The memory means 122 comprise one or more of a flash memory or a random access memory. The I/O means 123 can comprise one or more of a screen (e.g. touch screen), a light or LED, a haptic feedback, a virtual keyboard, a mouse, a trackball, a joystick or a projector (including a laser projector). The storage means 124 can comprise one or more of a hard drive or a SSD. The network access means can provide access to one or more networks such as a 3G, 4G/LTE, Wifi, BLE or a mesh network. Network traffic can be encrypted (e.g. tunnel, SSL, etc).

In an embodiment, computing resources (calculations, memory, I/O means, storage and connectivity) can be remotely accessed, for example as a complement to local resources (available in the robot itself). For example, further CPU units can be accessed through the Cloud for voice recognition computing tasks. Computing resources also can be shared. In particular, a plurality of robots can share resources. Connected devices in the vicinity of the robot also can share resources to some extent, for example via secured protocols. Display means also can be shared. For example, the television can be used as a further display by the robot when passing by.

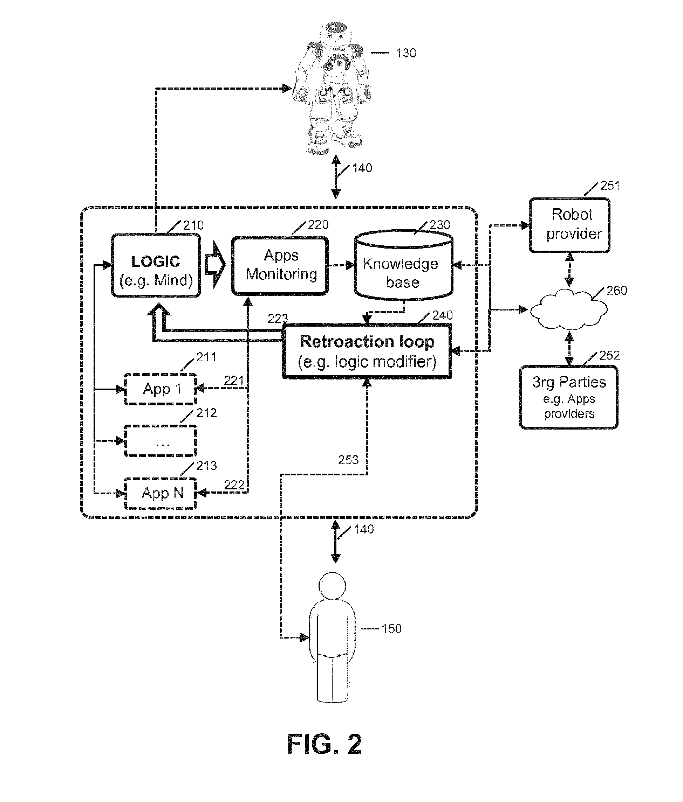

The figure 2 details some aspects of an embodiment of the method.

As an overview, the figure illustrates a robot 130 (e.g. a humanoid robot) in interaction 140 with at least one human user 150. The interaction comprises audio dialogs, visual interaction and body language. In more details, a processing logic 210 (e.g. a "mind" 100) controls the robot behavior. The logic controls the execution of software applications. For example, the logic supervises the launch and course of execution of competing applications ("App") such as App 211 and App N 213. Said applications can be monitored by an "app monitoring module" 220. In an embodiment, said module 220 is independent from the logic 210. In an embodiment, the module 220 can have at least some controls over the logic 210 (e.g. a watchdog). The monitoring element (component or software application or app or web service) can have direct access to software applications (or can get indirect access via the logic 210), comprising statistics or raw data thereof. The monitoring module feeds and consolidates a knowledge base 230 (raw data, statistics on app usages, as described hereafter). The knowledge base can also be fed by other robots 131 and/or other users 151 as illustrated. From the knowledge base 230, one or more retroaction feedbacks or loops 240 can take place. In an embodiment, the logic 210 can be modified via path 223 by a "logic modifier module". For example, as a result of corresponding analysis, the preferences for software applications can be changed (order or priority of execution, modes of execution, etc). For example, a certain application can be launched more frequently than others (or than usual). Another application may also be limited to certain contexts only. Said one or more retroaction loops 240 can act on the logic (output). Said one or more retroaction loops 240 can be controlled by one or more entities or parties (input). In an embodiment, third parties 252 (such as application providers) can control (to some extent) the regulation of apps. For example, the provider of the weather application can remark that the weather dialog is better accompanied by the simultaneous display of the weather map on the television if available and accessible. If authorized to do so, the application provider can change the execution rules associated with the weather application and such a change can be immediately applied to the robot. In an embodiment, the robot manufacturer or commercial provider 251 can have a distinct or complimentary role, possibly with some more control over the robot. As illustrated, the manufacturer of the robot 251 can have direct access to the robot (for example by a dedicated communication channel). In an embodiment, a human user (e.g. the owner of the robot with the appropriate credentials or access rights) can modify himself 253 the robot. In an embodiment, the human user can get authorizations from the robot manufacturer to modify some parts of it. In an embodiment, the human user can suggest one or modifications which are collected and later allowed (or not) by the robot manufacturer (or application provider).

Embodiments are now described in more details. Based on the monitoring of apps activities' data (A), further actions (B) can be taken by different entities (C) and said actions can be regulated in different manners (D).

Regarding the aspect of the activities being monitored (A), several embodiments are now described. A diversity of applications (211, 213, etc) can be installed on each robot of the installed base (or subpart of it, like a fleet). Each software application can be associated with a given specific metrics. A plurality of metrics can be consolidated and/or aggregated and be further analyzed. In other words, quantitative measurements can be performed as to the different activities of said applications. Such metrics for example can comprise the measurement of how many times a given software application has being launched, how long, in what geographies, what were the reactions of users (e.g. emotions, smiles, mood, answers). In an embodiment, the activities being monitored can comprise parameters or values or criteria such as time and frequency (e.g. frequency of execution per day or per week or per month, frequency of user request, when the app is launched most, for example in the morning or in the evening, on Sundays, etc), time spent (e.g. total interaction time), geolocation (for example to analyze where an application has the more success), errors (e.g. software and/or robot bugs or crashes, incorrect rules, inaudible sentences, bad reactions of users, etc), transitions between applications (e.g. "Markov" models indicating transitions between applications; for example the weather app can be strongly coupled with the news app while loosely coupled with the cooking app), app performance statistics (e.g. aside errors, at what speed was data retrieved and applications executed, etc), satisfaction of users (e.g. perceived emotions or moods passively or implicitly captured, declarations of satisfaction when actively and explicitly solicited), triggering conditions (e.g. statistics allowing to understand why and when a software application is launched), interacting users (e.g. profiles of users, gender, age, etc)

The knowledge of apps' usage data, - and further consolidated statistics derived from said apps' usage data -, can lead to further actions (B).

In an embodiment, there is maintained a "ranking" of the different applications. Said ranking can be dynamic and/or contextual. For example if an application proves to be successful, said application can be preferably launched in further contexts. Another example of use lies in the consumption of global resources. For example, accesses to an online voice recognition module accessible through the network (for higher performances due to better computing resources) can be optimized. If a given robot is measured as to require too many resources, the corresponding consumption can be reduced in order to balance resources consumption. A contrario, under utilizations can be detected and compensated. Consolidated statistics can be used to be notified of malfunctioning robots and or to notify one or more robots of one or more service messages. Generally speaking, the robotic platform operator can aggregate individual interactions and further construct a global (i.e. aggregated, consolidated) social interaction model (with a user, with a plurality of users, with a representative user, etc).

Regarding the aspect of the identity (C) of the different entities which can control the actions to be taken based on app's usage data, several embodiments are now described. The modes of autonomy of a robot can be determined by a plurality of parameters comprising contexts (e.g. as perceived by the robot) and/or controlling entities and/or access levels. The following embodiments thus can be combined, at least partly.

In an embodiment, the logic 210, internal to the robot, continuously updates the execution rules associated with software applications, said rules for example defining priorities and/or means to solve conflicts if any. In such an embodiment, the robot remains autonomous and "self-defines" corrective actions if any.

In another embodiment, the logic is controlled by an external party. For example the robot provider (or robotic platform operator or manufacturer of the robot) can control (e.g. update at any time) the logic 210, thereby the robot 130. To some extent, the providers of the different software applications can play a role.

Intermediate solutions or states are possible: the robot and/or other entities (i.e. humans and/or other robots) can control the robot. A wide diversity of situations can be described. In some cases, certain subparts of the robot can be exclusively controllable by the manufacturer of the robot while other subparts of the logic 210 can be autonomously (and/or exclusively) handled by the robot itself. Real-time constraints and connectivity issues may require certain subparts to be handled entirely autonomously. In some cases, where some connectivity can be reliably ensured, latency can be mitigated: it can be possible to have hosted services (in the cloud) managing a fleet of robots, said robots being entirely under control. In some other cases, for safety purposes (for example in the presence of babies near a heavy robot), it can be that autonomous modes are to be avoided. In such a case, a robot may be deactivated (or not able to further boot up).

Depending on (i) the nature and extent of the monitoring of applications, (ii) the nature of the corrective actions to be taken (iii) the identity of the different entities calling for such actions, a diversity of regulation schemes are possible. Two main regulation schemes are described: open-loop regulation and closed-loop regulation.

In an embodiment, an open-loop regulation mechanism is implemented. After data is gathered and that further statistics are derived from said data, human analyzes of statistics can be performed and further corrections (e.g. software updates) or actions (e.g. reengineering of services) can be taken. Advantageously, said corrections and/or actions can be of quality (even if changes are not immediately or rapidly brought to the robot). In practice, a human administrator or supervisor analyses collected data and further decides corrective actions if any.

In an embodiment, a closed-loop regulation mechanism is implemented. Apps metrics and/or statistics are *directly* coupled with the software applications. Advantageously, bugs reports and a fortiori zero day exploits do trigger automatic and "immediate" updates or patches. Changes can be propagated at any level of impact of the user experience by the software applications. For example, if statistics indicate that the weather app is massively coupled with the news app, software updates can manage the fleet of robots to systematically propose the news after the weather is announced. The latency of such updates can be reduced with intention. In some cases, local rules (e.g. user profiles or preferences) can maintain prior systems despite the global update. As the fiability of applications increases (trustful data and or dynamic and systemic behaviors), closed loop systems can be implemented.

In other embodiments, open-loop schemes and closed-loop schemes can be combined. For example, corrective actions can be classified into groups, indicating whether a human supervision is required or not (e.g. predefined associated metadata can facilitate such delimitations). Among other criteria, the assessment of systemic risks can be used. A systemic risk associated with an action exists when the considered action can threaten the code stability (or the safety) of the robot considered as a system. For example, a corrective action consisting in opportunistically displaying a weather map during a weather dialog generally does not raise any safety issue or does not risk the robot to bug. To the opposition, a corrective action consisting in triggering a dance in a certain context (e.g. heavy robot) might raise some issues, for example if the presence of a child in the vicinity is improperly not detected.

The disclosed methods can take form of an entirely hardware embodiment (e.g. FPGA), an entirely software embodiment or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or any instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

## Claims

1. Method of handling a software application on a robot, said robot executing a plurality of software applications, at least two software applications competing for execution, the method comprising the steps of:
monitoring the execution of at least one software application;
in response to receiving a modification request, modifying said at least one software application;
executing the modified software application on the robot.

2. The method of claim 1, wherein a software application is associated with at least one predefined modification rule indicative of systemic risks and wherein the step of modifying the software application comprises successfully verifying said modification rule.

3. The method of any preceding claim, wherein modifying a software application comprises modifying the execution rules associated with said software application.

4. The method of any preceding claim, wherein modifying a software application comprises modifying the program code of with said software application.

5. The method of any preceding claim, wherein monitoring a software application comprises monitoring execution or usage data associated with the software application, said data being selected from the group comprising parameters such as frequency, date, time, geolocation, user data feedback or input, user emotional reaction, interacting user profile, interaction duration, errors, function calls, triggering conditions and combinations thereof.

6. The method of claim 5, further comprising deriving statistical data from said usage execution or usage data.

7. The method of claim 6, further comprising displaying said statistical data.

8. The method of claim 7, wherein a software application is modified under human supervision.

9. The method of claims 1 to 6, wherein a software application is directly modified upon receiving the modification request without human supervision.

10. The method of any preceding claim, further comprising receiving a confirmation of a user before modifying a software application.

11. The method of any preceding claim, wherein a modification request is received from the robot logic and/or the robot manufacturer and/or an application provider.

12. The method of any preceding claim, further comprising identifying a missing application in the robot, retrieving and installing said missing software application in the robot during the dialog with the user.

13. A computer program comprising instructions for carrying out the steps of the method according to any one of claim 1 to 12 when said computer program is executed on a suitable computer device.

14. A system comprising means adapted to carry out the steps of the method according to any one of claims 1 to 12.
